# EUROPEAN PATENT SPECIFICATION

(11) **EP 3 926 556 B1**
(45) Date of publication and mention of the grant of the patent: **29.07.2026**
(21) Application number: 20180769.0
(22) Date of filing: 18.06.2020
(51) Int. Cl.: G06Q 10/02

(54) **TABLE-MOUNTED SENSOR ASSEMBLY FOR DETERMINING A STATUS OF A WORKSPACE, DESK OR TABLE**
TISCHMONTIERTE SENSORANORDNUNG ZUR BESTIMMUNG DES STATUS EINES ARBEITSPLATZES, SCHREIBTISCHS ODER TISCHES
ENSEMBLE CAPTEURS MONTÉS SUR UNE TABLE POUR DÉTERMINER L'ÉTAT D'UN ESPACE DE TRAVAIL, D'UN BUREAU OU D'UNE TABLE

(43) Date of publication of application: 22.12.2021
(73) Proprietor: Sensative AB, 22362 Lund (SE)
(72) Inventor: Pettersson, Mats, 27596 Sövde (SE); Mats, Lars, 22655 Lund (SE); Adolfsson, Morgan, 2146 Malmö (SE); Jonsson, Lars, 22465 Lund (SE)
(74) Representative: Høiberg P/S

(56) References cited:
- WO-A1-2018/231828
- WO-A1-2019/020799
- US-A1- 2016 148 485
- US-B2- 9 442 017

## Description

### Background

Flexible working conditions, as well as desk space and workspace sharing, are becoming increasingly popular. When employees or visitors work in an office, it is necessary that they are able to find a workspace. Moreover, keeping track of who is in the office and making sure that all employees have access to a workspace is also necessary. For this purpose, various occupancy sensors and occupancy monitoring systems have been developed. There are different ways of capturing occupancy. Some systems use identification tags, based on, for example, RFID. Other solutions employ passive infrared (PIR) sensor, which are typically used as motion detectors, and frequently used in security alarm and lighting applications, and yet others use cameras.

While the existing workspace occupancy sensor systems are useful for the basic task of monitoring the occupancy of a workspace, they do not inform users if the workspace is clean or whether it has already been used by another employee or visitor. The existing workspace occupancy sensors also tend to be relatively power-consuming, which means that they will need power supply from a cable or frequent battery replacement.

WO 2018/231828 A1 (MILLER HERMAN INC [US]) discloses a workstation management system. The workstation includes a short-range communication circuit, a user interface including a light source, and an electronic processor. The electronic processor is configured to receive a reservation including a reservation start time, increase a communication range of the short-range communication circuit when the reservation start time is a predetermined period of time from a current time, and receive a proximity signal from the electronic device.

WO 2019/020799 A1 (FLOWSCAPE AB [SE]) discloses a method for determining an occupancy status of a workspace, the method comprising: detecting at least one object located within the workspace; determining an object type for a detected object; and determining an occupancy status of the workspace based on the object type of at least one detected object.

US 9 442 017 B2 (READ DALE [GB]) discloses an occupancy sensor that includes a passive infrared sensor (PIR sensor) and an infrared sensor (IR sensor). The occupancy sensor is configured to confirm occupancy or non-occupancy in dependence on signals measured by both the PIR sensor and the IR sensor.

US 2016/148485 A1 (HAYES MICHAEL JOSEPH [US] ET AL) discloses a surface cleaning assistance system that includes a surface and a sensor mounted relative to the surface. The sensor is configured to detect pressure applied to the surface and generates sensor signals based on the detected pressure. The system also includes a controller in communication with the sensor and has stored therein a cleaning target value. The controller is configured to receive the sensor signals from the sensor, to compare the sensor signals to the cleaning target value, and to generate an output signal associated with the sensor signals, the output signal indicating whether the sensor signals indicate a pressure below, at, or above the cleaning target value.

### Summary

The present disclosure relates to a table-mounted sensor assembly for determining a status of a workspace, desk or table. The sensor assembly offers a compact and efficient solution, which can be mounted on, for example, a desk. The table-mounted sensor assembly for determining a status of a workspace, desk or table, the table-mounted sensor assembly comprises, in a first embodiment:
- a motion and/or proximity sensor;
- a wireless transceiver for wireless communication with an external unit, such as a gateway;
- a processing unit;
- a local user interface for manually setting a state of the table-mounted sensor assembly; and
- a battery for powering the motion and/or proximity sensor, the wireless transceiver, the processing unit and the local user interface,
wherein the table-mounted sensor assembly comprises at least a dirty state, an occupied state, and a clean state, wherein the processing unit is configured to set the table-mounted sensor assembly in one of the dirty state, occupied state and clean state based on motion and/or proximity sensor data from the motion and/or proximity sensor and user input data from the local user interface to determine the status of the workspace, wherein the local and manual user interface (102) is used to indicate that cleaning is being done, and, once the cleaning has been done, set the sensor assembly (100) in the clean state, and wherein the sensor assembly (100) enters the occupied state when the sensor assembly (100) is in one of the dirty state and the clean state and the motion and/or proximity sensor (110) detects motion of an object, wherein the local and manual user interface (102) comprises a manual button (102) comprising at least one magnet (112) disposed outside a housing (101), and a magnetically activated sensor switch (116) disposed inside the housing (101),
wherein the sensor assembly (100) enters a cleaning state upon a cleaning indication from the local and manual user interface (102).

The state of the table-mounted sensor assembly is dependent on both the motion and/or proximity sensor and the local user interface for manually setting the state of the table-mounted sensor assembly. In practice this means that the motion and/or proximity sensor can be used to detect the presence of a person, such as an employee, using the workplace to work, or cleaning staff. The local and manual interface, which may be implemented as a manual button, can be used by the cleaning staff to indicate that cleaning is being done, and, once the cleaning has been done, that the desk is clean. The table-mounted sensor may therefore comprise a further state: a cleaning state. Thus, the table-mounted sensor assembly may be configurable in at least three states (dirty, occupied, clean) or in at least four states (dirty, occupied, cleaning, clean).

The processing unit may play an active role in setting the table-mounted sensor assembly in one of the dirty state, occupied state, clean state and, optionally, cleaning state. As an example, the processing unit may set the table-mounted sensor to the cleaning state when it receives a cleaning indication from the local user interface. Entering the cleaning state may then trigger a timer. When a predefined time of the timer has elapsed, the processing unit may set the table-mounted sensor in the clean state. The handling of the different states and the functionality based on input from the motion and/or proximity sensor and local user interface is described in further detail below.

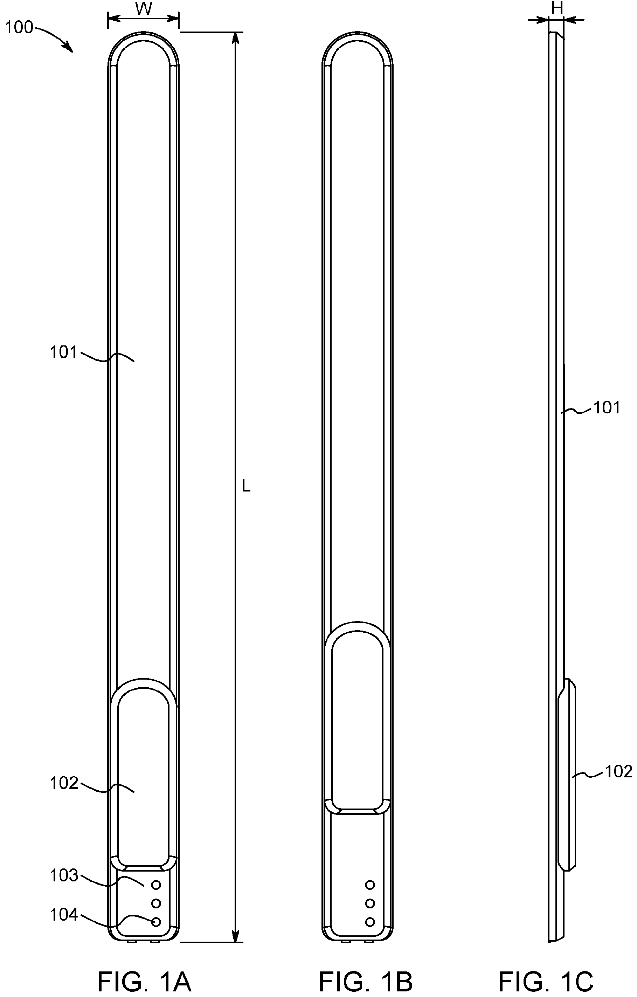

The motion and/or proximity sensor may further contribute to the efficiency of the presently disclosed table-mounted sensor assembly. In a preferred embodiment, the motion and/or proximity sensor comprises a light emitter, such as an infrared LED emitter, and a light sensor, such as an infrared light sensor. The light emitter may be configured to emit at least one light pulse at intervals, whereas the infrared light sensor detects reflected light. One embodiment of such a configuration is shown in fig. 1A. In this figure, openings (103, 104) for a light emitter and light sensitive sensor are shown. The output power of the light emitter may be configurable in order to adapt the table-mounted sensor assembly to different environments.

The local user interface may, as described, be actively used by, for example, cleaning staff to manually set a state of the table-mounted sensor assembly. In a preferred embodiment, the local user interface is implemented as a button, wherein the local user interface comprises a magnetically activated sensor switch, and wherein the manual button comprises at least one magnet. The inventors have realized that a magnetically activated sensor switch can be disposed inside the housing of the table-mounted sensor assembly, and if the magnet is disposed outside the housing, a mechanism where, for example, a sliding movement of the button and magnet along the housing of the table-mounted sensor assembly, can be used to activate the magnetically activated sensor. This provides an efficient solution for manual control of the table-mounted sensor assembly without any mechanical parts that need to interfere with the inside of the housing. The solution is particularly useful for an embodiment of the table-mounted sensor assembly that has a limited width and can be mounted on the edge of a table-top of a table or desk.

As will be understood by a person skilled in the art, use of the presently disclosed table-mounted sensor assembly is not limited to a workspace in an office. The table-mounted sensor assembly can be used in any situation and area where it is useful to monitor occupancy and have knowledge about whether the area is clean, occupied or dirty, and can be mounted on other items than tables.

### Description of drawings

Fig. 1 shows an embodiment of the presently disclosed table-mounted sensor assembly from different angles and configurations.
Fig. 2 shows the inside of one embodiment of the presently disclosed table-mounted sensor assembly, i.e. the battery and a number of components on a printed circuit board (PCB).
Fig. 3 shows an embodiment of a manual button for the table-mounted sensor assembly.
Fig. 4 shows a conceptual overview of how the motion sensor (in the form of a light emitter and a light sensitive sensor) and the local user interface (in the form of a magnetically activated sensor switch and a magnet) work to configure the table-mounted sensor assembly in one of the states.
Fig. 5 shows possible state transitions for the states of the presently disclosed table-mounted sensor assembly.

### Detailed description

The present disclosure relates to table-mounted sensor assembly for determining a status of a workspace, desk or table. The table-mounted sensor assembly comprises:
- a wireless transceiver for wireless communication with an external unit, such as a gateway;
- a processing unit; and
- a battery.

The table-mounted sensor assembly may further comprise:
- a motion and/or proximity sensor; and
- a local user interface for manually configuring a state of the table-mounted sensor assembly.

According to a first embodiment, the table-mounted sensor assembly comprises at least a dirty state, an occupied state, and a clean state. The processing unit may be configured to set the table-mounted sensor assembly in one of the dirty state, occupied state and clean state based on motion and/or proximity sensor data from the motion and/or proximity sensor and user input data from the local user interface. Preferably, the state reflects the status of the workspace.

The presently disclosed table-mounted sensor assembly may further comprise an antenna. As a person skilled in the art will understand, the antenna may be any suitable type of antenna, including a wire antenna, a chip antenna and a printed circuit board antenna.

The wireless transceiver may be a LoRa (Long Range) wireless transceiver. LoRa uses license-free sub-gigahertz radio frequency bands like 433 MHz, 868 MHz (Europe), 915 MHz (Australia and North America) and 923 MHz (Asia). LoRa enables long-range transmissions (more than 10 km in rural areas) with low power consumption. LoRa chipsets can be acquired in small and high-performing chipsets and are suitable for the presently disclosed table-mounted sensor assembly. The table-mounted sensor assembly may also be part of system having a central device, such as a Z-Wave, ZigBee, LoRa, Bluetooth, Bluetooth Low Energy (BLE) or Thread controller and/or gateway. Such a system preferably communicates wirelessly using a Z-Wave, ZigBee or Thread based communication protocol, and/or using a 4G and/or 5G cellular network. The presently disclosed table-mounted sensor assembly is not limited to any particular system or wireless protocol. A system comprising the presently disclosed table-mounted sensor assembly may further comprise a software application running on, for example a PC, tablet or mobile phone, for monitoring the state of one or several of the table-mounted sensor assemblies. Such applications can be used by users or employees to be informed about the status of workspaces, desks or tables and, for example, find a clean free table. Alternatively, or in combination, the application can be used by cleaning staff to have an overview of the table-mounted sensors and/or to use the application as a remote button for controlling the clean or cleaning state of the table-mounted sensor assembly wirelessly through the gateway.

The presently disclosed table-mounted sensor assembly may comprise further sensors, such as temperature sensors, capacitive sensors, vibration sensors, or any type of useful additional sensor.

The table-mounted sensor assembly may also communicate back to the user. Thus, the table-mounted sensor assembly may comprise at least one light-emitting diode (LED) for communication with the user. The at least one light-emitting diode can be used for various purpose, but for the presently disclosed table-mounted sensor assembly it may, specifically, be used for monitoring the state of the sensor assembly. In one embodiment, the at least one light-emitting diode indicates if the table-mounted sensor assembly is in the dirty state, the occupied state, the cleaning state or the clean state. As a non-limiting example, the LED may generate recurring short red blinks if the sensor assembly is in the dirty state or the occupied state, recurring short orange blinks if the sensor assembly is in the cleaning state, and recurring short green blinks if the sensor assembly is in the clean state. The LED does not necessarily need an opening but can be placed under the housing. If the housing is thin enough or at least partially transparent, the LED can be seen through the housing.

As described above, the presently disclosed table-mounted sensor assembly offers a compact and efficient solution, which can be mounted on, for example, a desk. The state of the table-mounted sensor assembly depends on both the motion and/or proximity sensor and the local user interface for manually configuring a state of the table-mounted sensor assembly. The inventors have realized a sensor assembly improved in this way can be a very efficient tool for providing trusted information about occupancy and whether the area is clean, occupied or dirty.

### States

The table-mounted sensor assembly may be configurable in at least three states (dirty, occupied, clean) or at least four states (dirty, occupied, cleaning, clean). Upon power-up or reset, the sensor assembly will typically be assumed to be in the dirty state.

If the cleaning staff begins a cleaning process, the cleaning person shall use the local user interface, typically by pushing, moving or toggling a button, which is further described below, the table-mounted sensor assembly may enter the cleaning state. Entering the cleaning state may trigger a timer. When a cleaning time of the timer has elapsed, the table-mounted sensor assembly may enter the clean state. The cleaning time may be, for example 2 minutes, or any suitable time.

If the table-mounted sensor assembly is in the dirty state or the clean state and the motion and/or proximity sensor detects motion of an object, the table-mounted sensor assembly may enter the occupied state.

If the table-mounted sensor assembly is in the occupied state and the motion and/or proximity sensor does not detect motion for a predefined period of time, the table-mounted sensor assembly may enter the dirty state. The dirty state may therefore indicate that the desk or workspace is available. Under some circumstances it may be possible to use a dirty desk, table or space, whereas in other situations it may be a requirement, or at least a recommendation, that only disinfected desks or tables are used.

### Local user interface

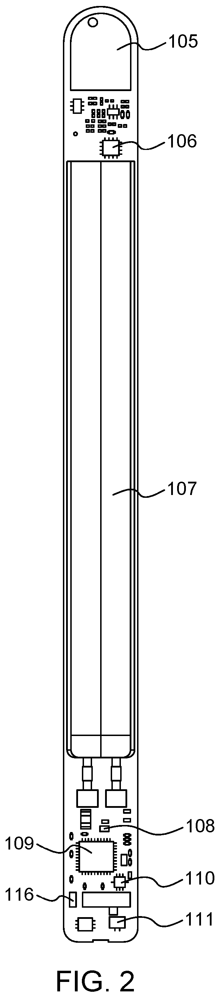

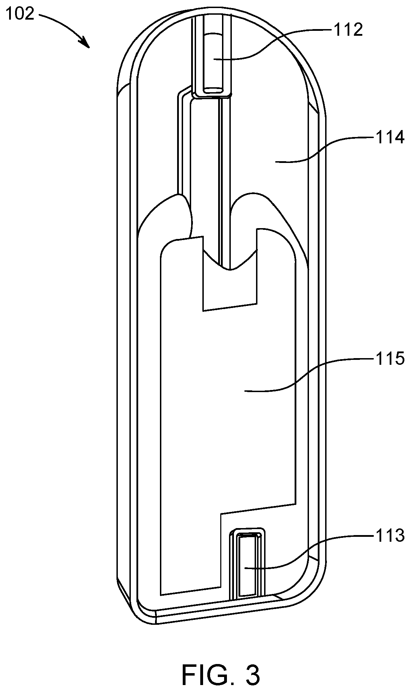

The local user interface may, as described, be actively used by, for example, cleaning staff to manually configure a state of the table-mounted sensor assembly. In a preferred embodiment, the local user interface is implemented as a button, wherein the local user interface comprises a magnetically activated sensor switch, and wherein the manual button comprises at least one magnet. A magnetically activated sensor switch can be disposed inside the housing of the table-mounted sensor assembly, and if the magnet is disposed outside the housing, a mechanism where, for example, a sliding movement of the button and magnet along the housing of the table-mounted sensor assembly can be used to activate the magnetically activated sensor. Fig. 3 shows an embodiment of a manual button (102) for the table-mounted sensor assembly. The view is an inside view, from which it can be seen that a button holder in the form of a plate (115) can be attach to the housing of the table-mounted sensor assembly. This mechanism allows the button housing (114), and consequently the first and second magnets (112, 113) to make a sliding movement along the housing of the table-mounted sensor assembly to actuate a magnetically activated sensor switch in the table-mounted sensor assembly. When one of the magnets approach the magnetically activated sensor, for example the magnetically activated sensor (116) in fig. 2, it will provide a simple indication, for example a cleaning indication, to the processing unit.

The button can be slid in a length direction of the sensor assembly. It can be noted that the button with magnet can be implemented as a part that does not need any direct physical (mechanical, electrical) contact with components inside the housing. The housing can therefore remain closed without further openings for the local user interface without relying on wireless communication solutions, such as RFID.

Since the magnetically activated sensor switch may be configured to indicate any change in position caused by the magnet, the button will not necessarily have to be in a certain position to give a cleaning indication. It may be sufficient to move it from one position to another, for example the position of fig. 1A to the position of fig. 1B, or vice versa.

The manual button may comprise a first magnet (112) and a second magnet (113), referring to fig.3. In this embodiment, one of the magnets may be used as an activation magnet for the magnetically activated sensor switch, whereas the other magnet can be used for various purposes. As an example, the second magnet can be used to hold the button in certain predefined positions, or force the button in one direction, if there is a magnetic material somewhere in or on the table-mounted sensor assembly. This may provide further assistance to the user. Thus, in one embodiment, the table-mounted sensor assembly comprises a magnetic material configured to cooperate with the first magnet and/or the second magnet to control a position of the button. Any of the first magnet and second magnet can provide this functionality.

Various functions of the button may be configured by communication through the wireless transceiver for wireless communication. For example, it may be possible to configure if the button should react on movements of the magnets in both sliding directions or only one sliding direction and/or if a certain position should trigger an event or interrupt.

The table-mounted sensor assembly may be provided with an adhesive on a bottom side and may be adapted to be attached to a surface, such as an underside or an edge of a table-top of a table or desk. A edge of a table-top may typically have a height on the order of some centimetres. An elongate table-mounted sensor assembly may therefore conveniently be mounted on the edge of a table top or desk, preferably facing the user. For this solution, the arrangement comprising an internal magnetically activated sensor switch and an external button comprising a magnet adapted to make a sliding movement along the housing of the table-mounted sensor assembly, provides an efficient local user interface.

This local interface is not limited to a table-mounted sensor assembly for determining a status of a workspace, desk or table, but can be used in any sensor assembly that could benefit from the solution. In particular, such a sensor assembly would comprise:
- at least one sensor switch configured to detect a given state and a change of state between the given state and at least one other state;
- a wireless transceiver for wireless communication with an external unit, such as a gateway;
- a processing unit;
- a local user interface for manually setting a state of the table-mounted sensor assembly;
- a battery; and
- a housing,
wherein the local user interface comprises a magnetically activated sensor switch disposed inside the housing, and manual button comprising at least one magnet disposed outside the housing, wherein the at least one magnet is adapted to make a sliding movement along the housing of the sensor assembly.

As a person skilled in the art will understand, the sensor assembly may incorporate any feature of the presently disclosed table-mounted sensor assembly, such as dimensions.

According to one embodiment, the table-mounted sensor assembly enters the clean state or the cleaning state in response to a clean or cleaning indication from a device, preferably a handheld device, such as a mobile phone. In this embodiment, the cleaning staff may have any handheld device, including a mobile device, such as a tablet, a mobile phone, a smart watch or a wearable device. A software application may run on the device, wherein the software applicant may have a function or virtual button that can provide the functionality of the manual button on the table-mounted sensor assembly. The software application may communicate with the table-mounted sensor assembly wirelessly through the gateway.

### Motion/proximity sensor

The motion/proximity sensor of the presently disclosed table-mounted sensor assembly may be any suitable motion and/or proximity sensor. A motion sensor may be implemented as a proximity sensor, wherein proximity data from the proximity sensor at different points in time is compared. A difference in the compared proximity data may then be interpreted as motion.

A solution which has shown to be particularly useful is a proximity sensor comprising a light sensitive sensor, such as an infrared light sensor, and a light emitter, such as an infrared LED emitter.

The light emitter and the light sensitive sensor may be configured such that objects and movement within a distance of 5 mm - 500 mm is detected. For example, the output power of the light emitter may be configurable. The assumption for such a configuration is that humans move over time, as opposed to objects that are mostly stationary or move very little. According to one mode of operation sampling is done at slow intervals (e.g. minutes) and when there are multiple changes over these intervals it is assumed a living moving human in present. The light emitter may be configured to emit at least one light pulse at intervals, preferably wherein the intervals are between 10 seconds and 5 minutes, more preferably between 30 seconds and 2 minutes. The emitted light may be, for example, 850 nm or 940 nm infrared light. Both the duration of the light pulses themselves and the intervals between the light pulses may be configurable through the wireless transceiver.

The light sensitive sensor may, for example, include an array of visible and infrared photodiodes. In one embodiment, the proximity sensor is configured to sense the least one light pulse reflected by an environment of the table-mounted sensor assembly. The proximity sensor may be configured such that it reports a change from no presence to presence (or vice versa). If there are then multiple changes registered by the proximity sensor during a predefined interval, the motion and/or proximity sensor indicates motion. Thus, according to one embodiment, an indication of motion may require that an object, typically a person, is present and stays at the workspace, desk or table.

The light emitter and the light sensitive sensor may be arranged in the housing of the table-mounted sensor assembly, wherein the housing may have an opening for the light sensitive sensor and another opening for the light emitter. The openings may have a cover, such as a transparent cover. Light pulses can be sent by the light emitter through its opening, and reflected light can be sensed by the light sensitive sensor through the other opening. Preferably, the light emitter and the light sensitive sensor are placed in different compartments inside the housing, or have a component between each other.

### Dimensions

The presently disclosed table-mounted sensor assembly preferably has a thin and elongate form factor, as shown in, for example fig. 1. The form factor, in combination, with a number of features and the arrangement of the motion and/or proximity sensor and the local user interface has a number of advantages. Such an embodiment can, for example, be mounted on the edge of a table-top of a table or desk.

Preferably, the table-mounted sensor assembly has a height of less than 10 mm, preferably wherein a main body of the table-mounted sensor assembly has a height of less than 5 mm, and wherein the magnet is arranged on a top side of the table-mounted sensor assembly and has a height of less than 5 mm. Despite the fact that the table-mounted sensor is thin, it may nevertheless have a long battery lifetime since it may be relatively long. According to one embodiment, the battery has a length of at least 80 mm. Preferably, the width of the table-mounted sensor assembly is less than 30 mm. The total length of the table-mounted sensor assembly may be at least 100 mm. The table-mounted sensor assembly may be provided with an adhesive on a bottom side and may thus be adapted to be attached directly to the edge of a table-top of a table or desk. Alternatively, the table-mounted sensor assembly may be fastened to a bottom platee which can be mounted on the edge, or other surface. The local user interface, preferably in the form of a button comprising at least one magnet configured to make a sliding movement in the length direction of the table-mounted sensor assembly, may have substantially the same width as the table-mounted sensor assembly.

The above described local user interface implemented as a button, wherein the local user interface comprises a magnetically activated sensor switch, and wherein the manual button comprises at least one magnet, provides an efficient solution to be used by the cleaning staff to indicate that cleaning is being done. The magnetic implementation allows the cleaning staff to toggle the button without further consideration.

### Detailed description of drawings

The invention will in the following be described in greater detail with reference to the accompanying drawings. The drawings are exemplary and are intended to illustrate some of the features of the presently disclosed disclosed table-mounted sensor assembly, and are not to be construed as limiting to the presently disclosed invention.

Fig. 1 shows an embodiment of the presently disclosed table-mounted sensor assembly (100) from different angles and configurations. Fig. 1 shows the top side of the disclosed table-mounted sensor assembly (100). The housing (101) has an opening (103) for a light sensitive sensor and another opening (104) for a light emitter. Light pulses may be sent by a light emitter through the opening (103). Reflected light can be sensed by a sensor through the second opening (103). The table-mounted sensor assembly (100) further comprises a manual button (102). Fig. 1A and 1B shows that manual button in two different positions. As can be seen, the manual button can be moved in length (L) direction of the table-mounted sensor assembly (100). Denotations for length (L), width (W) and height (H) are provided.

Fig. 2 shows the inside of one embodiment of the presently disclosed table-mounted sensor assembly (100). A battery (107) and a number of components are placed on a bottom place, which will typically be a PCB. The battery (107) may be disposed over other components. The components comprise a processing unit (micro controller) (109), a light emitter (111) and a light sensitive sensor (110), a light-emitting diode for communication with the user and a magnetically activated sensor (116). At the top of the table-mounted sensor assembly (100) there is an antenna (105) and a wireless transceiver (106).

Fig. 3 shows an embodiment of a manual button (102) for the table-mounted sensor assembly. The view is an inside view, from which it can be seen that a button holder in the form of a plate (115) can be attach to the housing of the table-mounted sensor assembly. This mechanism allows the button housing (114), and consequently the first and second magnets (112, 113) to make a sliding movement along the housing of the table-mounted sensor assembly to actuate a magnetically activated sensor switch in the table-mounted sensor assembly.

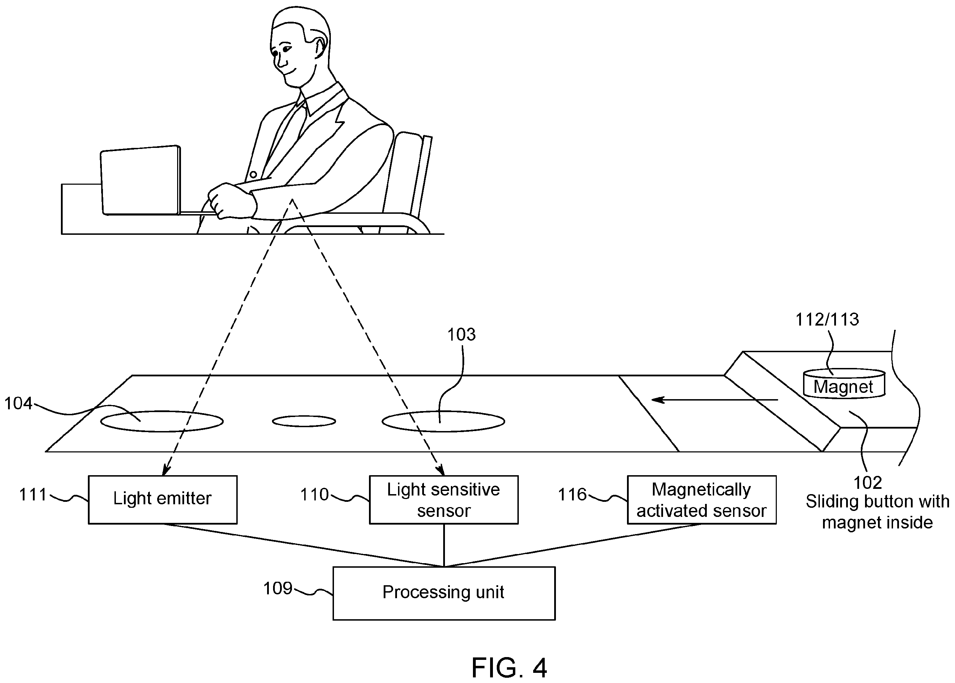

Fig. 4 shows a conceptual overview of how the motion sensor (in the form of a light emitter (111) and a light sensitive sensor (110)) and the local user interface (in the form of a magnetically activated sensor switch (116) and a magnet (112 and/or 113)) work to configure the table-mounted sensor assembly (100) in one of the states. The processing unit (109) may configure the light emitter (111) to emit light pulses at intervals. Light reflected (in fig. 4 reflected by an object (person) occupying a space) are sensed by the light sensitive sensor (110), which communicates it to the processing unit (109). If the object is no longer present when a new light pulse is emitted, or if the object moves position, the reflection of the light pulse will be different, which will be senses by the light sensitive sensor (110).

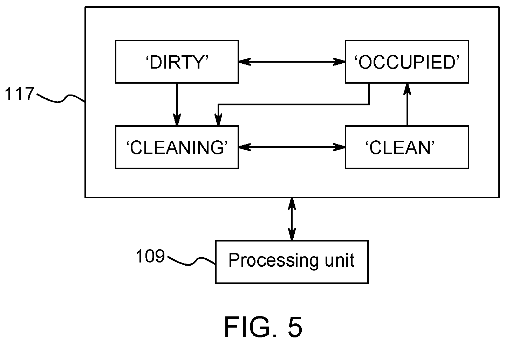

Fig. 5 shows possible state transitions for the states of the presently disclosed table-mounted sensor assembly. A processing unit (109) manages the states of the state machine (117) based on based on motion and/or proximity sensor data from the motion and/or proximity sensor and user input data from the local user interface.

### List of elements in figures

100 - table-mounted sensor assembly
101 - housing
102 - manual button
103 - opening for proximity sensor
104 - opening for light emitter
105 - antenna
106 - wireless transceiver
107 - battery
108 - light-emitting diode for communication with the user
109 - processing unit
110 - light sensitive sensor
111 - light emitter
112 - first magnet
113 - second magnet
114 - button housing
115 - button holder
116 - magnetically activated sensor
117 - state machine

## Claims

1. A sensor assembly (100) to be mounted on a workspace, desk or table for determining a status of the workspace, desk or table, the sensor assembly (100) comprising:
- a motion and/or proximity sensor (110);
- a wireless transceiver (106) for wireless communication with an external unit, such as a gateway;
- a processing unit (109);
- a local and manual user interface (102) for manually setting a state of the sensor assembly (100); and
- a battery for powering the motion and/or proximity sensor (110), the wireless transceiver (106), the processing unit (109) and the local and manual user interface (102),
- a housing (101)
wherein the sensor assembly (100) comprises at least a dirty state, an occupied state, and a clean state, wherein the processing unit (109) is configured to set the sensor assembly (100) in one of the dirty state, occupied state and clean state based on motion and/or proximity sensor (110) data from the motion and/or proximity sensor (110) and user input data from the local and manual user interface (102) to determine the status of the workspace,
**characterized in that**
wherein the local and manual user interface (102) comprises a manual button (102) comprising at least one magnet (112) disposed outside the housing (101), and a magnetically activated sensor switch (116) disposed inside the housing (101),
wherein the sensor assembly (100) enters a cleaning state upon a cleaning indication from the local and manual user interface (102).

2. The sensor assembly (100) according to claim 1, wherein entering the cleaning state triggers a timer, and wherein the sensor assembly (100) enters the clean state when a predefined cleaning time of the timer has elapsed.

3. The sensor assembly (100) according to claim 1, wherein the at least one magnet (112; 113) is configured to make a sliding movement along the housing (101) of the sensor assembly (100) to activate the magnetically activated sensor switch (116) when the manual button (102) is moved by a user.

4. The sensor assembly (100) according to any one of the preceding claims, wherein the motion and/or proximity sensor (110) comprises a light sensitive sensor (110), such as in infrared light sensor and a light emitter (111), such as an infrared LED emitter.

5. The sensor assembly (100) according to claim 4, wherein the light emitter (111) is configured to emit at least one light pulse at intervals, preferably wherein the intervals are between 10 seconds and 5 minutes, more preferably between 30 seconds and 2 minutes, and wherein the light sensitive sensor is configured to sense the least one light pulse reflected by an environment of the sensor assembly (100).

6. The sensor assembly (100) according to any one of the preceding claims, wherein, when there are multiple changes registered by the proximity sensor (110) during an interval, the motion and/or proximity sensor (110) indicates motion.

7. The sensor assembly (100) according to any one of the preceding claims, wherein the sensor assembly (100) enters the dirty state when the sensor assembly (100) is in the occupied state and the motion and/or proximity sensor (110) does not detect motion for a predefined period of time.

8. The sensor assembly (100) according to any one of the preceding claims, wherein the sensor assembly (100) has a width of less than 30 mm and a length of at least 100 mm and is adapted to be mounted on an edge of a table-top of a table or desk.

9. A system comprising one or more of the sensor assemblies (100) according any one of claims 1-8, and a gateway for communication with the sensor assemblies (100).

## Patentansprüche

1. Sensoreinheit (100), die an einem Arbeitsplatz, Schreibtisch oder Tisch montiert werden soll, zur Bestimmung eines Status des Arbeitsplatzes, Schreibtischs oder Tisches, wobei die Sensoreinheit (100) umfasst:
• einen Bewegungs- und/oder Näherungssensor (110);
• einen drahtlosen Transceiver (106) zur drahtlosen Kommunikation mit einer externen Einheit, wie beispielsweise einem Gateway;
• eine Verarbeitungseinheit (109);
• eine lokale und manuelle Benutzerschnittstelle (102) zum manuellen Einstellen eines Zustands der Sensoreinheit (100); und
• eine Batterie zum Versorgen des Bewegungs- und/oder Näherungssensors (110), des drahtlosen Transceivers (106), der Verarbeitungseinheit (109) und der lokalen und manuellen Benutzerschnittstelle (102),
• ein Gehäuse (101);
wobei die Sensoreinheit (100) zumindest einen schmutzigen Zustand, einen belegten Zustand und einen sauberen Zustand umfasst, wobei die Verarbeitungseinheit (109) dazu konfiguriert ist, die Sensoreinheit (100) in einen der schmutzigen Zustand, den belegten Zustand und den sauberen Zustand auf Grundlage von Bewegungs- und/oder Näherungssensordaten vom Bewegungs- und/oder Näherungssensor (110) und Benutzereingabedaten von der lokalen und manuellen Benutzerschnittstelle (102) einzustellen, um den Status des Arbeitsplatzes zu bestimmen,
**dadurch gekennzeichnet,**
**dass** die lokale und manuelle Benutzerschnittstelle (102) eine manuelle Taste (102) umfasst, die zumindest einen Magneten (112) umfasst, der außerhalb des Gehäuses (101) angeordnet ist, und einen magnetisch aktivierten Sensorschalter (116), der innerhalb des Gehäuses (101) angeordnet ist,
wobei die Sensoreinheit (100) bei Erhalt einer Reinigungsanzeige von der lokalen und manuellen Benutzerschnittstelle (102) in einen Reinigungszustand eintritt.

2. Sensoreinheit (100) nach Anspruch 1, wobei das Eintreten in den Reinigungszustand einen Timer auslöst, und wobei die Sensoreinheit (100) in den sauberen Zustand eintritt, wenn eine vordefinierte Reinigungszeit des Timers abgelaufen ist.

3. Sensoreinheit (100) nach Anspruch 1, wobei der zumindest eine Magnet (112; 113) dazu konfiguriert ist, eine Gleitbewegung entlang des Gehäuses (101) der Sensoreinheit (100) auszuführen, um den magnetisch aktivierten Sensorschalter (116) zu aktivieren, wenn die manuelle Taste (102) von einem Benutzer bewegt wird.

4. Sensoreinheit (100) nach einem der vorhergehenden Ansprüche, wobei der Bewegungs- und/oder Näherungssensor (110) einen lichtempfindlichen Sensor (110), wie beispielsweise einen Infrarotlichtsensor, und einen Lichtemitter (111), wie beispielsweise einen Infrarot-LED-Emitter, umfasst.

5. Sensoreinheit (100) nach Anspruch 4, wobei der Lichtemitter (111) dazu konfiguriert ist, zumindest einen Lichtpuls in Intervallen auszusenden, vorzugsweise wobei die Intervalle zwischen 10 Sekunden und 5 Minuten liegen, noch bevorzugter zwischen 30 Sekunden und 2 Minuten, und wobei der lichtempfindliche Sensor dazu konfiguriert ist, den zumindest einen von einer Umgebung der Sensoreinheit (100) reflektierten Lichtpuls zu detektieren.

6. Sensoreinheit (100) nach einem der vorhergehenden Ansprüche, wobei, wenn während eines Intervalls mehrere Änderungen vom Näherungssensor (110) registriert werden, der Bewegungs- und/oder Näherungssensor (110) eine Bewegung anzeigt.

7. Sensoreinheit (100) nach einem der vorhergehenden Ansprüche, wobei die Sensoreinheit (100) in den schmutzigen Zustand eintritt, wenn sich die Sensoreinheit (100) im belegten Zustand befindet und der Bewegungs- und/oder Näherungssensor (110) für einen vordefinierten Zeitraum keine Bewegung detektiert.

8. Sensoreinheit (100) nach einem der vorhergehenden Ansprüche, wobei die Sensoreinheit (100) eine Breite von weniger als 30 mm und eine Länge von zumindest 100 mm aufweist und dazu angepasst ist, an einer Kante einer Tischplatte eines Tisches oder Schreibtischs montiert zu werden.

9. System, umfassend eine oder mehrere der Sensoreinheiten (100) nach einem der Ansprüche 1-8, und ein Gateway zur Kommunikation mit den Sensoreinheiten (100).

## Revendications

1. Ensemble capteur (100) destiné à être monté sur un espace de travail, un bureau ou une table pour déterminer un état de l'espace de travail, du bureau ou de la table, l'ensemble capteur (100) comprenant :
• un capteur de mouvement et/ou de proximité (110) ;
• un émetteur-récepteur sans fil (106) pour une communication sans fil avec une unité externe, telle qu'une passerelle ;
• une unité de traitement (109) ;
• une interface utilisateur locale et manuelle (102) pour régler manuellement un état de l'ensemble capteur (100) ; et
• une batterie pour alimenter le capteur de mouvement et/ou de proximité (110), l'émetteur-récepteur sans fil (106), l'unité de traitement (109) et l'interface utilisateur locale et manuelle (102),
• un boîtier (101);
dans lequel l'ensemble capteur (100) comprend au moins un état sale, un état occupé et un état propre, dans lequel l'unité de traitement (109) est configurée pour régler l'ensemble capteur (100) dans l'un des états sale, occupé et propre sur la base de données du capteur de mouvement et/ou de proximité (110) provenant du capteur de mouvement et/ou de proximité (110) et de données d'entrée utilisateur provenant de l'interface utilisateur locale et manuelle (102) afin de déterminer l'état de l'espace de travail, **caractérisé en ce que** dans lequel l'interface utilisateur locale et manuelle (102) comprend un bouton manuel (102) comprenant au moins un aimant (112) disposé à l'extérieur du boîtier (101), et un interrupteur capteur activé magnétiquement (116) disposé à l'intérieur du boîtier (101), dans lequel l'ensemble capteur (100) entre dans un état de nettoyage à la suite d'une indication de nettoyage provenant de l'interface utilisateur locale et manuelle (102).

2. Ensemble capteur (100) selon la revendication 1, dans lequel l'entrée dans l'état de nettoyage déclenche une minuterie, et dans lequel l'ensemble capteur (100) entre dans l'état propre lorsque qu'un temps de nettoyage prédéfini de la minuterie s'est écoulé.

3. Ensemble capteur (100) selon la revendication 1, dans lequel le au moins un aimant (112 ; 113) est configuré pour effectuer un mouvement de glissement le long du boîtier (101) de l'ensemble capteur (100) afin d'activer l'interrupteur capteur activé magnétiquement (116) lorsque le bouton manuel (102) est déplacé par un utilisateur.

4. Ensemble capteur (100) selon l'une quelconque des revendications précédentes, dans lequel le capteur de mouvement et/ou de proximité (110) comprend un capteur sensible à la lumière (110), tel qu'un capteur de lumière infrarouge, et un émetteur de lumière (111), tel qu'un émetteur LED infrarouge.

5. Ensemble capteur (100) selon la revendication 4, dans lequel l'émetteur de lumière (111) est configuré pour émettre au moins une impulsion lumineuse à des intervalles, de préférence dans lequel les intervalles sont compris entre 10 secondes et 5 minutes, plus préférablement entre 30 secondes et 2 minutes, et dans lequel le capteur sensible à la lumière est configuré pour détecter la au moins une impulsion lumineuse réfléchie par un environnement de l'ensemble capteur (100).

6. Ensemble capteur (100) selon l'une quelconque des revendications précédentes, dans lequel, lorsqu'il y a plusieurs changements enregistrés par le capteur de proximité (110) pendant un intervalle, le capteur de mouvement et/ou de proximité (110) indique un mouvement.

7. Ensemble capteur (100) selon l'une quelconque des revendications précédentes, dans lequel l'ensemble capteur (100) entre dans l'état sale lorsque l'ensemble capteur (100) est dans l'état occupé et que le capteur de mouvement et/ou de proximité (110) ne détecte pas de mouvement pendant une période de temps prédéfinie.

8. Ensemble capteur (100) selon l'une quelconque des revendications précédentes, dans lequel l'ensemble capteur (100) a une largeur inférieure à 30 mm et une longueur d'au moins 100 mm et est adapté pour être monté sur un bord d'un plateau de table d'une table ou d'un bureau.

9. Système comprenant un ou plusieurs des ensembles capteurs (100) selon l'une quelconque des revendications 1-8, et une passerelle pour la communication avec les ensembles capteurs (100).
